# EUROPÄISCHE PATENTSCHRIFT

(11) **EP 1 896 699 B1**
(45) Veröffentlichungstag und Bekanntmachung des Hinweises auf die Patenterteilung: **24.11.2010**
(21) Anmeldenummer: 06743047.0
(22) Anmeldetag: 24.05.2006
(51) Int. Cl.: F01L 1/34, F01L 1/344, F16K 15/02, F16K 15/14

(54) **STEUERVENTIL FÜR EINE VORRICHTUNG ZUR VARIABLEN EINSTELLUNG DER STEUERZEITEN VON GASWECHSELVENTILEN EINER BRENNKRAFTMASCHINE**
CONTROL VALVE FOR A DEVICE FOR VARIABLY ADJUSTING THE VALVE TIMING FOR GAS EXCHANGE VALVES IN AN INTERNAL COMBUSTION ENGINE
SOUPAPE DE COMMANDE POUR UN DISPOSITIF DE REGLAGE VARIABLE DES TEMPS DE COMMANDE DE SOUPAPES D'ECHANGE DES GAZ D'UN MOTEUR A COMBUSTION INTERNE

(30) Priorität: 22.06.2005 DE 102005028757
(43) Veröffentlichungstag der Anmeldung: 12.03.2008
(73) Patentinhaber: Schaeffler Technologies GmbH & Co. KG, 91074 Herzogenaurach (DE)
(72) Erfinder: KONIAS, Stefan, 90419 Nürnberg (DE); HOPPE, Jens, 91056 Erlangen (DE)
(86) Internationale Anmeldenummer: PCT/EP2006/004936
(87) Internationale Veröffentlichungsnummer: WO 2006/136258

(56) Entgegenhaltungen:
- EP-A- 0 840 018
- EP-A- 1 291 563
- EP-A- 1 447 602
- US-A1- 2002 129 781

## Beschreibung

### Gebiet der Erfindung

Die Erfindung betrifft ein Steuerventil für eine Vorrichtung zur variablen Einstellung der Steuerzeiten von Gaswechselventilen einer Brennkraftmaschine nach dem Oberbegriff der Ansprüche 1 oder 6 und eine Verwendung eines in einer Ringnut angeordneten Rückschlagventils für einen Druckmittelkreislauf einer Vorrichtung zur variablen Einstellung der Steuerzeiten von Gaswechselventilen einer Brennkraftmaschine nach dem Oberbegriff der Ansprüche 13 oder 16.

In Brennkraftmaschinen werden zur Betätigung der Gaswechselventile Nockenwellen eingesetzt. Nockenwellen sind in der Brennkraftmaschine derart angebracht, dass auf ihnen angebrachte Nocken an Nockenfolgern, beispielsweise Tassenstößeln, Schlepphebeln oder Schwinghebeln, anliegen. Wird eine Nockenwelle in Drehung versetzt, so wälzen die Nocken auf den Nockenfolgern ab, die wiederum die Gaswechselventile betätigen. Durch die Lage und die Form der Nocken sind somit sowohl die Öffnungsdauer als auch die Öffnungsamplitude aber auch die Öffnungs- und Schließzeitpunkte der Gaswechselventile festgelegt.
Während der Betätigung der Gaswechselventile üben die Ventilfedern eine Kraft auf die Nocken der Nockenwelle aus, wodurch auf die Nockenwelle Wechselmomente wirken.

Moderne Motorkonzepte gehen dahin, den Ventiltrieb variabel auszulegen. Einerseits sollen Ventilhub und Ventilöffnungsdauer variabel gestaltbar sein, bis hin zur kompletten Abschaltung einzelner Zylinder. Dafür sind Konzepte wie schaltbare Nockenfolger oder elektrohydraulische oder elektrische Ventilbetätigungen vorgesehen. Weiterhin hat es sich als vorteilhaft herausgestellt, während des Betriebs der Brennkraftmaschine Einfluss auf die Öffnungs- und Schließzeiten der Gaswechselventile nehmen zu können. Dabei ist es insbesondere wünschenswert auf die Öffnungs- bzw. Schließzeitpunkte der Einlass- bzw. Auslassventile getrennt Einfluss nehmen zu können, um beispielsweise gezielt eine definierte Ventilüberschneidung einzustellen. Durch die Einstellung der Öffnungs- bzw. Schließzeitpunkte der Gaswechselventile in Abhängigkeit vom aktuellen Kennfeldbereich des Motors, beispielsweise von der aktuellen Drehzahl bzw. der aktuellen Last, können der spezifische Treibstoffverbrauch gesenkt, das Abgasverhalten positiv beeinflusst, der Motorwirkungsgrad, das Maximaldrehmoment und die Maximalleistung erhöht werden.

Die beschriebene Variabilität der Gaswechselventilsteuerzeiten wird durch eine relative Änderung der Phasenlage der Nockenwelle zur Kurbelwelle erreicht. Dabei steht die Nockenwelle meist über einen Ketten-, Riemen-, Zahnradtrieb oder gleichwirkende Antriebskonzepte in Antriebsverbindung mit der Kurbelwelle. Zwischen dem von der Kurbelwelle angetriebenen Ketten-, Riemen- oder Zahnradtrieb und der Nockenwelle ist eine Vorrichtung zur variablen Einstellung der Steuerzeiten von Gaswechselventilen einer Brennkraftmaschine, im folgenden auch Nockenwellenversteller genannt, angebracht, die das Drehmoment von der Kurbelwelle auf die Nockenwelle überträgt. Dabei ist diese Vorrichtung derart ausgebildet, dass während des Betriebs der Brennkraftmaschine die Phasenlage zwischen Kurbelwelle und Nockenwelle sicher gehalten und, wenn gewünscht, die Nockenwelle in einem gewissen Winkelbereich gegenüber der Kurbelwelle verdreht werden kann.

In Brennkraftmaschinen mit je einer Nockenwelle für die Einlass- und die Auslassventile können diese mit je einem Nockenwellenversteller ausgerüstet werden. Dadurch können die Öffnungs- und Schließzeitpunkte der Einlass- und Auslassgaswechselventile zeitlich relativ zueinander verschoben und die Ventilüberschneidungen gezielt eingestellt werden.

Der Sitz moderner Nockenwellenversteller befindet sich meist am antriebsseitigen Ende der Nockenwelle. Der Nockenwellenversteller kann aber auch auf einer Zwischenwelle, einem nicht rotierenden Bauteil oder der Kurbelwelle angeordnet sein. Er besteht aus einem von der Kurbelwelle angetriebenen, eine feste Phasenbeziehung zu dieser haltenden Antriebsrad, einem in Antriebsverbindung mit der Nockenwelle stehenden Abtriebselement und einem das Drehmoment vom Antriebsrad auf das Abtriebselement übertragenden Verstellmechanismus. Das Antriebsrad kann im Fall eines nicht an der Kurbelwelle angeordneten Nockenwellenverstellers als Ketten-, Riemen- oder Zahnrad ausgeführt sein und wird mittels eines Ketten-, eines Riemen- oder eines Zahnradtriebs von der Kurbelwelle angetrieben. Der Verstellmechanismus kann elektrisch, hydraulisch oder pneumatisch betrieben werden.

Zwei bevorzugte Ausführungsformen hydraulisch verstellbarer Nockenwellenverstellern stellen die sogenannten Axialkolbenversteller und Rotationskolbenversteller dar.

Bei den Axialkolbenverstellern steht das Antriebsrad mit einem Kolben und dieser mit dem Abriebselement jeweils über Schrägverzahnungen in Verbindung. Der Kolben trennt einen durch das Abriebselement und das Antriebsrad gebildeten Hohlraum in zwei axial zueinander angeordnete Druckkammern. Wird nun die eine Druckkammer mit Druckmittel beaufschlagt, während die andere Druckkammer mit einem Tank verbunden wird, so verschiebt sich der Kolben in axialer Richtung. Die axiale Verschiebung des Kolbens wird durch die Schrägverzahnungen in eine relative Verdrehung des Antriebsrades zum Abriebselement und damit der Nockenwelle zur Kurbelwelle übersetzt.

Eine zweite Ausführungsform hydraulischer Nockenwellenversteller sind die sogenannten Rotationskolbenversteller. In diesen ist das Antriebsrad drehfest mit einem Stator verbunden. Der Stator und das Abtriebselement (Rotor) sind konzentrisch zueinander angeordnet, wobei der Rotor kraft-, form- oder stoffschlüssig, beispielsweise mittels eines Presssitzes, einer Schraub- oder Schweißverbindung mit einer Nockenwelle, einer Verlängerung der Nockenwelle oder einer Zwischenwelle verbunden ist. Im Stator sind mehrere, in Umfangsrichtung beabstandete Ausnehmungen ausgebildet, die sich ausgehend vom Rotor radial nach außen erstrecken. Die Ausnehmungen sind in axialer Richtung durch Seitendeckel druckdicht begrenzt. In jeden dieser Ausnehmungen erstreckt sich ein mit dem Rotor verbundener Flügel, wodurch jede Ausnehmung in zwei Druckkammern geteilt wird. Dadurch werden zwei Gruppen von Druckkammer ausgebildet. Durch gezieltes Verbinden einer Gruppe von Druckkammern mit einer Druckmittelpumpe und der anderen Gruppe von Druckkammern mit einem Tank kann die Phase der Nockenwelle relativ zur Kurbelwelle eingestellt bzw. gehalten werden. Die Flügel können beispielsweise einteilig mit dem Rotor ausgeführt, oder als separate Bauteile ausgebildet sein, welche in einer axial verlaufenden Flügelnut an der äußeren Mantelfläche des Rotors angeordnet sind und mittels eines Federelements radial nach außen gedrängt werden.

Zur Steuerung des Nockenwellenverstellers erfassen Sensoren die Kenndaten des Motors wie beispielsweise die aktuelle Phasenlage der Nockenwelle zur Kurbelwelle, den Lastzustand und die Drehzahl. Diese Daten werden einer elektronischen kontrolleinheit zugeführt, die nach Vergleich der Daten mit einem Kenndatenfeld der Brennkraftmaschine den Zu- und den Abfluss von Druckmittel zu den verschiedenen Druckkammern steuert.

Um die Phasenlage der Nockenwelle gegenüber der Kurbelwelle zu verstellen wird in hydraulischen Nockenwellenverstellern eine der zwei gegeneinander wirkenden Druckkammern mit einer Druckmittelpumpe und die andere mit dem Tank verbunden. Der Zulauf von Druckmittel zur einen Kammer in Verbindung mit dem Ablauf von Druckmittel von der anderen Kammer verschiebt den die Druckkammern trennenden Kolben / Flügel, wodurch in Axialkolbenverstellern durch eine Axialverschiebung des Kolbens mittels der Schrägverzahnungen die Nockenwelle relativ zur Kurbelwelle verdreht wird. In Rotationskolbenverstellern wird durch die Druckbeaufschlagung der einen Gruppe von Druckkammern und die Druckentlastung der anderen Gruppe von Druckkammern eine Verschiebung des Flügels in Umfangsrichtung und damit direkt eine Verdrehung der Nockenwelle zur Kurbelwelle bewirkt. Um die Phasenlage zu halten werden beide Druckkammern entweder mit der Druckmittelpumpe verbunden oder sowohl von der Druckmittelpumpe als auch vom Tank getrennt.

Die Steuerung der Druckmittelströme zu bzw. von den Druckkammern erfolgt mittels eines Steuerventils, meist ein 4/3-Proportionalventil. Dieses besteht im Wesentlichen aus einem hohlzylindrisch ausgeführten Ventilgehäuse, einem Steuerkolben und einer Stelleinheit. Das Ventilgehäuse ist mit je einem Anschluss für jede Gruppe von gleichwirkenden Druckkammern (Arbeitsanschluss), einem Anschluss zur Druckmittelpumpe und mindestens einem Anschluss zu einem Tank versehen. Diese Anschlüsse sind meist als Ringnuten an der Außenmantelfläche des Ventilgehäuses ausgebildet, welche über radiale Öffnungen mit dem Inneren des Steuerkolbens kommunizieren. Innerhalb des Ventilgehäuses ist der Steuerkolben axial verschiebbar angeordnet. Der Steuerkolben kann mittels der Stelleinheit, die meist elektromagnetisch oder hydraulisch betätigt wird, entgegen der Federkraft eines Federelements axial in jede Stellung zwischen zwei definierte Endstellungen positioniert werden. Die Außenmantelfläche des Steuerkolbens ist im Wesentlichen dem Innendurchmesser des Ventilgehäuses angepasst und mit Ringnuten und Steuerkanten versehen. Durch eine Steuerung der Stelleinheit können die einzelnen Anschlüsse miteinander hydraulisch verbunden werden, wodurch die einzelnen Druckkammern wahlweise mit der Druckmittelpumpe oder dem Tank verbunden werden können. Ebenso kann eine Stellung des Steuerkolbens vorgesehen sein, in der die Druckmittelkammern sowohl von der Druckmittelpumpe als auch vom Druckmitteltank getrennt sind.

Ein derartiges Steuerventil ist aus der JP 07-229408A bekannt. In diesem Fall sind an der Außenmantelfläche des Ventilgehäuses fünf axial zueinander beabstandete Ringnuten ausgebildet, wobei jede der Ringnuten als ein Anschluss des Ventils dient. In jedem Nutgrund der Ringnuten ist eine radiale Öffnung ausgebildet, welche in das Innere des Ventilgehäuses mündet. Dabei sind Öffnungen benachbarter Nutgründe in Umfangsrichtung um 180° zueinander versetzt.

Innerhalb des Ventilgehäuses ist ein massiv ausgebildeter Steuerkolben angeordnet, welcher mittels einer elektromagnetischen Stelleinheit gegen die Kraft einer Feder innerhalb des Ventilgehäuses in axialer Richtung zwischen zwei Endanschlägen positioniert werden kann. Der Außendurchmesser des Steuerkolbens ist dem Innendurchmesser des Ventilgehäuses angepasst. Des Weiteren sind an dem Steuerkolben drei Ringnuten ausgebildet, über welche, abhängig von der Stellung des Steuerkolbens relativ zum Ventilgehäuse, benachbarte Anschlüsse miteinander verbunden werden können.

Aus der DE 198 53 670 A1 ist eine weitere Ausführungsform eines derartigen Steuerventils bekannt. Dieses unterscheidet sich von der in der JP 07-229408A dargestellten Ausführungsform dadurch, dass der Steuerkolben hohl ausgeführt ist. Des Weiteren sind an der äußeren Mantelfläche des Ventilgehäuses nur drei Anschlüsse ausgebildet, wobei sich ein vierter Anschluss in axialer Richtung des Ventilgehäuses ausgebildet ist. Druckmittel kann nun über den axialen Zulaufanschluss, je nach Stellung des Steuerkolbens relativ zum Ventilgehäuse, zu einem der beiden Arbeitsanschlüsse geleitet werden. Gleichzeitig ist der jeweils andere Arbeitsanschluss über eine an der Außenmantelfläche des Steuerkolbens ausgebildete Ringnut mit dem Tankanschluss verbunden.
In dieser Ausführungsform eines Steuerventils ist die Lage des Zulaufanschlusses und des Tankanschlusses austauschbar.

Durch das Abwälzen der Nocken einer Nockenwelle auf den Nockenfolger eines Ventiltriebs wirken periodische Wechselmomente auf die Nockenwelle. Diese Wechselmomente werden auf den Rotor des Nockenwellenverstellers übertragen, wodurch in den Druckkammern Druckspitzen entstehen. Um zu verhindern, dass diese Druckspitzen über Druckmittelleitungen und das Steuerventil in den Druckmittelkreislauf der Brennkraftmaschine übertragen werden, sind zwischen dem Steuerventil und der Druckmittelpumpe Rückschlagventile vorgesehen. Dabei können separate oder in das Steuerventil integrierte Rückschlagventile vorgesehen sein. Ein im Steuerventil integriertes Rückschlagventil ist beispielsweise in der EP 1 291 563 A2 dargestellt. In dieser Ausführungsform ist innerhalb einer an einem Ventilgehäuse ausgebildeten Ringnut ein Schließelement aus einem zu einem Ring gebogenen Band angeordnet. Die Ringnut wird in radialer Richtung von einer Hülse begrenzt. Sowohl in der Hülse als auch im Nutgrund der Ringnut sind Öffnungen ausgebildet, über die das Druckmittel in das Innere des Ventilgehäuses gelangen kann. Des Weiteren besteht das Band aus einem Federstahl und ist in radialer Richtung nach außen vorgespannt.
Übersteigt der Druck im Inneren des Ventilgehäuses den Druck des an der Öffnung der Hülse anstehenden Druckmittels, so kommt das Band an der inneren Mantelfläche der Hülse zum Anliegen und verhindert so den Druckmittelstrom vom Inneren des Ventilgehäuses zur Öffnung der Hülse. Im umgekehrten Fall wird das Band durch das an der Öffnung der Hülse anstehende Druckmittel nach innen gedrängt, wodurch Druckmittel von der Öffnung der Hülse in das Innere des Ventilgehäuses führen kann.
Diese bauraumsparende Variante eines Rückschlagventils ist mit dem Nachteil behaftet, dass die Montage in einer Umgebungskonstruktion aufgrund der radial nach außen gerichteten Vorspannung des Bandes sehr aufwändig und fehleranfällig ist. Da die Ringnuten gegenüber der Umgebungskonstruktion im montierten Zustand abgedichtet sein müssen ist der Außendurchmesser des Ventilgehäuses dem Innendurchmesser der Umgebungskonstruktion angepasst und das Ventilgehäuse mittels einer Spielpassung in der Umgebungskonstruktion integriert. Dabei hat das radial nach außen vorgespannte Band das Bestreben sich nach außen aufzuweiten, wodurch dieses aus der Ringnut hervorsteht. Während der Montage kann dieses Band nun beschädigt werden oder sich zwischen der Umgebungskonstruktion und dem Ventilgehäuse verklemmen. Dadurch wird die Funktionssicherheit des Rückschlagventils oder sogar des gesamten Steuerventils in Frage gestellt.

In einer alternativen Ausführungsform ist das den Schließkörper bildende Band innerhalb einer Ringnut angeordnet, die an der inneren Mantelfläche des Ventilgehäuses ausgebildet ist. Dabei ist das Band in radialer Richtung nach außen vorgespannt. Bei einem Druckmittelfluss in das Ventilgehäuse hinein wird es radial nach innen gebogen, während es sonst an dem Nutgrund der Ringnut anliegt und somit den Druckmittelfluss nach außen sperrt. Nachteilig wirkt sich in dieser Ausführungsform die komplizierte Montage des Schließkörpers aus. Weiterhin besteht die Gefahr, dass das Band in den Bereich des innerhalb des Ventilgehäuses verschiebbar angeordneten Steuerkolbens gerät und somit dessen Positionierung verhindert.

In der EP 1 447 602 A1 ist ein Steuerventil für einen Nockenwellenversteller offenbart. Das Steuerventil weist ein Rückschlagventil auf, welches in das Steuerventilgehäuse integriert ist. Das Rückschlagventil ist dabei als Kugel, Scheibe oder Bandfeder ausgebildet. Dadurch, dass es in das Steuerventilgehäuse integriert ist, beeinträchtigt es nicht die Bewegung des Ventilkolbens.

Die EP 0 840 018 A2 zeigt ein 5-kanaliges Pilot-Transferventil mit einem Ölversorgungskanal. Es ist ein Rückschlagventil so vorgesehen, dass ein Ölstrom aus jedem der fünf Kanäle über das Rückschlagventil in den Ötversorgungskanal gelangen kann, während in der umgekehrten Richtung ein Fluß zum ersten, vierten und fünften Kanal gesperrt sind. Durch diese Konfiguration kann das Ventil sowohl über einen Zentralkanal als auch über Doppelendkanäle versorgt werden.

Die US2002/0129781 A zeigt einen Nockenwellenversteller in Flügelzellenausführung mit einer hydraulischen Verriegelungseinrichtung. Der Verriegelungseinrichtung ist ein Rückschlagventil vorgeschaltet.

### Zusammenfassung der Erfindung

Der Erfindung liegt daher die Aufgabe zugrunde diese geschilderten Nachteile zu vermeiden und somit ein Steuerventil für eine Vorrichtung zum variablen Einstellen der Steuerzeiten von Gaswechselventilen einer Brennkraftmaschine zu schaffen, wobei ein im Druckmittelkreislauf des Nockenwellenverstellers oder am oder im Steuerventil integriertes Rückschlagventil vorgesehen ist. Dabei soll sichergestellt werden, dass dieses während der Montage nicht beschädigt wird oder die Funktion des Steuerventils beeinträchtigt. Des Weiteren soll der Montageaufwand des Steuerventils und damit dessen Herstellungskosten nicht erhöht werden.

In einer ersten Ausführungsform eines Steuerventil für eine Vorrichtung zur variablen Einstellung der Steuerzeiten von Gaswechselventilen einer Brennkraftmaschine mit einem Ventilgehäuse, welches innerhalb einer Umgebungskonstruktion angeordnet ist, mit einem Steuerkolben, welcher innerhalb des Ventilgehäuses angeordnet ist, wobei an zumindest einem der beiden Bauteile eine sich in dessen Umfangsrichtung erstreckende Nut ausgebildet ist, die von Druckmittel durchströmt wird, mit einem in der Nut angeordneten Schließkörper, und mit mindestens je einer im Ventilgehäuse und der Umgebungskonstruktion ausgebildeten Öffnung, worüber die Nut mit einer Druckmittelleitung kommuniziert, wobei der Schließkörper und die Öffnung als Rückschlagventil zusammenwirken, wird die Aufgabe erfindungsgemäß dadurch gelöst, dass das Rückschlagventil kein Federelement aufweist, welches den Schließkörper in Richtung der Öffnung drängt.
Dabei kann vorgesehen sein, dass der Schließkörper während des Schließvorgangs des Rückschlagventils ausschließlich durch die Strömung des Druckmittels auf die Öffnung zu bewegt wird.

An einer Außenmantelfläche des Ventilgehäuses sind mehrere axial zueinander beabstandete Ringnuten angebracht, welche über im Nutgrund ausgebildete Öffnungen mit dem Inneren des Ventilgehäuses kommunizieren. Im montierten Zustand des Steuerventils werden diese Ringnuten radial nach außen durch eine Umgebungskonstruktion, beispielsweise eine Nockenwelle, eine Wandung eines Zylinderkopfes oder eine Hülse begrenzt. In der die Ringnuten begrenzenden Wandung der Umgebungskonstruktion ist pro Ringnut eine Öffnung vorgesehen, welche die Ringnuten mit jeweils einer Druckmittelleitung verbindet. Weiterhin sind in den Nutgründen der Ringnuten ebenfalls Öffnungen vorgesehen, worüber die Ringnuten mit dem Inneren des Ventilgehäuses kommunizieren. Somit kann Druckmittel von einer Druckmittelpumpe über die als Zulaufanschluss dienenden Ringnut in das Innere des Ventilgehäuses geleitet werden. Des Weiteren kann über die anderen Ringnuten Druckmittel zu den verschiedenen Gruppen gleichwirkender Druckkammern des Nockenwellenverstellers gelangen.

Um zu verhindern, dass die in den Druckkammern des Nockenwellenverstellers entstehenden Druckspitzen über den Zulaufanschluss in den Druckmittelkreislauf der Brennkraftmaschine gelangen, ist innerhalb der Ringnut, die als Zulaufanschluss dient, ein Rückschlagventil angeordnet. Das Rückschlagventil besteht aus einem starren Schließkörper, welcher in radialer Richtung des Ventilgehäuses verschiebbar angeordnet ist, und der Öffnung in der Wandung der Umgebungskonstruktion, welche als Ventilsitz dient. Übersteigt der von der Druckmittelpumpe aufgebaute Systemdruck den Druck der innerhalb des Ventilgehäuses herrscht, bewegt sich der Schließkörper radial nach innen und gibt somit den Druckmittelfluss von der Öffnung in der Umgebungskonstruktion zum Inneren des Ventilgehäuses frei. Dabei bewegt sich der Schließköper ohne die Rückstellkraft einer Feder in radialer Richtung, bis dieser an dem Nutgrund der Ringnut zum Anliegen kommt.
Etabliert sich ein Druckmittelfluss in die entgegengesetzte Richtung, so strömt das Druckmittel die Rückseite des Schließkörpers an, wodurch dieser in radialer Richtung nach außen, gegen den Ventilsitz gedrängt wird. Dabei sind die Öffnung und der Schließkörper derart ausgebildet, dass der Schließkörper in diesem Fall derart an der Öffnung anliegt, dass ein Druckmittelfluss vom Ventilgehäuse in die Druckmittelleitung gesperrt wird.

Alternativ hierzu ist es ebenso möglich den Schließköper innerhalb einer am Steuerkolben ausgebildeten Ringnut anzuordnen, welche mit dem Zulaufanschluss in direkter Verbindung steht. In diesem Fall ist in dem Nutgrund der als Zulaufanschluss genutzten Ringnut nur eine Öffnung ausgebildet. Ebenso möglich ist die Ausbildung mehrerer eng benachbarte Öffnungen, welche in einem begrenzten Flächenintervall ausgebildet sind.

Die Anordnung des Rückschlagventils in einer Ringnut des Steuerventils bringt unter anderem den Vorteil mit sich, dass dieses in der kürzesten möglichen Entfernung zum Entstehungsort der Druckspitzen angeordnet ist. Daraus ergibt sich eine steifere hydraulische Abstützung. Des Weiteren wird kein zusätzlicher Bauraum für ein separates Rückschlagventil benötigt. Durch die Ausbildung des Rückschlagventils mit einem Schließelement, welches nicht durch ein Federelement betätigt wird, wird dessen Montage erheblich erleichtert. Das Schließelement wird innerhalb der Ringnut positioniert und anschließend werden die Bauteile gefügt. Die Gefahr eines Hervorspringens des Schließkörpers besteht nicht. Die strömungsbetätigte Ausführung des Rückschlagventils erlaubt weiterhin einen einfachen und kostengünstigen Aufbau und das ursprüngliche Design des Steuerventils kann beibehalten werden.

In einer vorteilhaften Weiterbildung der Erfindung ist vorgesehen, an dem Schließkörper mindestens ein Führungselement ausgebildet ist, welches mit mindestens einer Führungsfläche, das an dem die Nut aufweisenden Bauteil ausgebildet ist, zusammenwirkt. Weiterhin kann vorgesehen sein den Schließkörper und das die Nut aufweisende Bauteil derart auszuführen, dass der Schließkörper nur in der vorgesehenen Orientierung montierbar ist.

Um zu gewährleisten, dass der Schließkörper jederzeit in radialer Richtung zur Öffnung orientiert ist und dass eine Bewegung des Schließkörpers ausschließlich in dieser Richtung erfolgen kann, ist an dem Schließkörper mindestens ein Führungselement ausgebildet. Diese/s Führungselement/e wirken mit dem Ventilgehäuse zusammen und verhindern eine Verdrehung des Schließkörpers innerhalb der Ringnut.
Diese Führungsfunktion kann beispielsweise durch die Ausbildung von zwei Führungsstegen realisiert werden, wobei die Führungsstege und der Schließkörper U-förmig ausgebildet sind und die Führungssteg an gegenüberliegenden Seiten des Nutgrundes anliegen. In dieser Ausführungsform ist vorteilhafterweise der Nutgrund in den Bereichen an denen die Führungsstege anliegen mit jeweils einer Abflachung versehen. Durch diese Ausbildung des Schließkörpers und des Ventilgehäuses wird zum einen funktionssicher eine Lagezuordnung des Schließkörpers relativ zum Ventilsitz erreicht und die Gefahr einer Fehlorientierung des Schließkörpers während der Montage minimiert.

Sind zusätzlich die beiden Abflachungen der Ringnut des Ventilgehäuses nicht parallel, sondern unter einem bestimmten Winkel größer Null zueinander ausgebildet und gleichzeitig die Führungsstege dieser Form angepasst wird erreicht, dass der Schließkörper nur in einer, der korrekten, Orientierung montiert werden kann und somit die Funktionssicherheit des Rückschlagventils gewährleistet ist.

Eine weitere Möglichkeit der Ausbildung eines Führungselements am Schließkörper besteht beispielsweise darin, einen zentral an einem Sperrelement des Schließelements ausgebildeten Zapfen vorzusehen, der in eine der Öffnungen im Nutgrund der Ringnut eingreift.

Vorteilhafterweise sind an dem Schließkörper Halteelemente ausgebildet, welche den Schließkörper innerhalb der Nut halten.
Durch die Ausbildung von Haltelementen an dem Schließkörper bzw. dessen Führungselementen wird der Schließkörper vor der Montage des Steuerventils gegen Verlieren gesichert. Derartige Halteelemente können beispielsweise als Rastnasen an den Führungsstegen ausgebildet sein, wobei die Rastnasen das Ventilgehäuse an der dem Schließkörper abgewandten Seite zumindest teilweise umgreifen. Im Falle des zentral angeordneten Zapfens können die Halteelemente als um dessen dem Sperrelement abgewandten Ende umlaufende Wulst ausgebildet sein.

Durch die Ausbildung der Halteelemente wird der Schließkörper zum einen gegen Verlieren während der Montage des Ventils und des Transports gesichert. Zum anderen wird, bei geeigneter Ausbildung der Halteelemente, verhindert, dass der Schließkörper während der Montage des Ventils in der Umgebungskonstruktion sich über die Ringnut hinaus erstreckt.

Durch die Integration des Rückschlagventils im Steuerventil und die Sicherung des Schließkörpers innerhalb der Ringnut entsteht während der Endmontage kein zusätzlicher Aufwand.

In einer Weiteren Ausführungsform eines Steuerventil für eine Vorrichtung zur variablen Einstellung der Steuerzeiten von Gaswechselventilen einer Brennkraftmaschine mit einem Ventilgehäuse, welches innerhalb einer Umgebungskonstruktion angeordnet ist, mit einem Steuerkolben, welcher innerhalb des Ventilgehäuses angeordnet ist, wobei an dem Ventilgehäuse eine sich in dessen Umfangsrichtung erstreckende Ringnut ausgebildet ist, die von Druckmittel durchströmt wird, und mit einem in der Ringnut angeordneten Rückschlagventil mit mindestens einem flexibel ausgebildeten Schließkörper, wird die Aufgabe erfindungsgemäß dadurch gelöst, dass das Rückschlagventil weiterhin einen der Form der Ringnut angepassten Rahmen aufweist, in dem ein Ende des mindestens einen Schließkörpers aufgenommen ist und weiterhin über zumindest einen Anschlag verfügt der die Schließbewegung des Schließkörpers begrenzt.

In dieser Ausführungsform ist innerhalb einer Ringnut des Steuerventils, die als Zulaufanschluss dient, ein ringförmiger Rahmen, bestehend aus einem starren, nur wenig biegbaren Material, angeordnet. Dabei ist die axiale Erstreckung des Rahmens der axialen Erstreckung der Ringnut angepasst. Der Rahmen ist derart ausgebildet, dass zwischen zwei ringförmigen Abschnitten, welche an den axialen Enden des Rahmens ausgebildet sind, zumindest eine Aussparung vorgesehen ist, durch welche Druckmittel von der Öffnung in der Umgebungskonstruktion in die Ringnut gelangen kann. Sind mehrere Aussparungen vorgesehen so werden diese von im Wesentlichen axial verlaufenden Abstützstreben voneinander getrennt.

Innerhalb des Rahmens ist zumindest ein flexibles Schließelement angeordnet, welches einenends vom Rahmen aufgenommen ist und dessen Abmessungen derart gewählt sind, dass es die gesamte Fläche der Ausnehmung/en überdecken kann. Der Rahmen besteht vorteilhafterweise aus einem Kunststoff und kann beispielsweise in einem Spritzgussverfahren hergestellt werden. In diesem Fall kann die Verbindung zwischen dem Schließkörper und dem Rahmen durch teilweises Umspritzen des Schließkörpers während des Herstellungsprozesses des Rahmens realisiert werden. Alternativ kann, durch Ausbildung von Formschlusselementen, eine formschlüssige Verbindung zwischen den beiden Komponenten vorgesehen sein.
Übersteigt der von der Druckmittelpumpe bereitgestellte Systemdruck den Druck innerhalb des Ventilgehäuses, so wird der flexible Schließkörper radial nach innen gebogen. Dadurch gibt dieser den Weg für das Druckmittel frei, welches nun von außen in die Ringnut eindringen und zur Vorrichtung geführt werden kann. Bei umgekehrtem Druckmittelfluss wird der flexible Schließkörper radial nach außen gedrängt, bis dieser am Rahmen und/oder den Abstützstreben zum Anliegen kommt. Diese Schließbewegung kann zusätzlich dadurch unterstützt werden, dass der Schließkörper aus einem federnden Material hergestellt ist.

Der Vorteil dieser Ausführungsform liegt darin, dass das Rückschlagventil einfach in der Ringnut montiert werden kann und nach der Montage verliersicher in der Ringnut aufgenommen ist. Das Rückschlagventil ist vorteilhafterweise ringförmig ausgebildet, mit zwei sich in Umfangsrichtung gegenüberstehenden offenen Enden, welche mittels einer Clipsverbindung oder ähnlichen Verbindungsmethoden miteinander verbunden werden können. Ein weiterer Vorteil besteht darin, dass weder der Rahmen noch der Schließkörper über den Rand der Ringnut hinaus ragen, wodurch eine einfachere und funktionssichere Montage des Steuerkolbens im Ventilgehäuse oder des Ventilgehäuses in der Umgebungskonstruktion gewährleistet ist.

In einer vorteilhaften Weiterbildung der Erfindung ist vorgesehen, dass der Schließkörper aus einem ringförmig gebogenen Band besteht und sich in Umfangsrichtung erstreckt, wobei ein axiales, ringförmiges Ende des Schließkörpers in dem Rahmen aufgenommen ist. Das Band besteht in einer vorteilhaften Ausführungsform aus einer Silikondichtlippe, die mittels eines 2-KomponentenSpritzgussprozesses direkt in den Rahmen eingespritzt wird.
Der Durchfluss von Druckmittel durch das Rückschlagventil kann dadurch erhöht werden, dass mehrere, in Umfangsrichtung beabstandete Aussparungen an dem Rahmen ausgebildet sind. In diesem Fall ist der Schließkörper als ringförmig gebogenes Band ausgebildet, wobei ein axiales Ende des ringförmig gebogenen Bandes in dem Rahmen aufgenommen ist. Benachbarte Aussparungen des Rahmens sind durch axial verlaufende Abstützstreben voneinander getrennt, welche gleichzeitig zur Wegbegrenzung des Schließkörpers in radialer Richtung nach außen dienen.

Weiterhin können zwei Schließkörper vorgesehen sein, die in axialer Richtung zueinander versetzt angeordnet sind, wobei jeweils ein Ende jedes Schließkörpers in dem Rahmen aufgenommen ist und wobei es sich bei diesen Enden um das jeweils von dem anderen Schließkörper abgewandte Ende handelt. In diesem Fall kann vorgesehen sein, die zwei Schließkörper derart anzuordnen und auszubilden, dass diese sich im gesperrten Zustand des Rückschlagventils in axialer Richtung überlappen.
Durch die Verwendung von zwei Schließkörpern, welche derart angeordnet sind, dass diese sich im geschlossenen Zustand zumindest teilweise überlappen, können Turbulenzen beim Durchfluss von Druckmittel und damit der hydraulische Widerstand verringert werden. Durch die Überlappung der Schließkörper im geschlossenen Zustand wird eine ringförmige Anlagefläche der Schließkörper aneinander ausgebildet, wodurch die Effektivität des Rückschlagventils gesteigert wird

Um zu verhindern, dass die flexiblen Schließkörper in geschlossenem Zustand durch den im Inneren des Steuerventils herrschenden Druck durch die Aussparungen hindurch gepresst werden kann vorgesehen sein, den flexiblen Schließkörper mit Versteifungselementen zu versehen. Diese Versteifungselemente erstrecken sich vorteilhafterweise in axialer Richtung oder Umfangsrichtung des Schließkörpers, wobei bei einer Erstreckung in Umfangsrichtung dessen Öffnungsbewegung nicht behindert wird.

Vorteilhafterweise ist der Rahmen mit zwei sich in Umfangsrichtung erstreckenden Ringelementen ausgebildet, welche durch mehrere, in Umfangsrichtung beabstandete, sich im wesentlichen axial erstreckende Abstützstreben miteinander verbunden sind, wobei sich zwischen den Ringelementen ein Filtergewebe erstreckt. Durch die Integration einer Filterfunktion in das Rückschlagventil können Schmutzpartikel im Druckmittel zurückgehalten werden, welche zum Ausfall des Steuerventils führen könnten

Weiterhin wird eine Verwendung eines in einer Ringnut angeordneten Rückschlagventils für einen Druckmittelkreislauf einer Vorrichtung zur variablen Einstellung der Steuerzeiten von Gaswechselventilen einer Brennkraftmaschine mit einem Schließkörper und einem Ventilsitz vorgeschlagen, wobei die Aufgabe erfindungsgemäß dadurch gelöst wird, dass der Schließkörper während des Schließvorgangs ausschließlich durch die Strömung eines Druckmittels auf den Ventilsitz zu bewegt wird.

In einer weiteren Verwendung eines in einer Ringnut angeordneten Rückschlagventils für einen Druckmittelkreislauf einer Vorrichtung zur variablen Einstellung der Steuerzeiten von Gaswechselventilen einer Brennkraftmaschine mit mindestens einem flexibel ausgebildeten Schließkörper, wird die Aufgabe erfindungsgemäß dadurch gelöst, dass das Rückschlagventil weiterhin einen Rahmen aufweist, in dem ein Ende des mindestens einen Schließkörpers aufgenommen ist und weiterhin über zumindest einen Anschlag verfügt der die Schließbewegung des Schließkörpers begrenzt.

Dabei kann das Rückschlagventil beispielsweise in einer Drehdurchführung für Druckmittel zwischen einer Nockenwelle und einer Lagerbrücke der Nockenwelle oder in einer Ringnut eines Steuerventils angeordnet sein.

Durch die Verwendung eines in einer Ringnut angeordneten Rückschlagventils für einen Druckmittelkreislauf einer Vorrichtung zur variablen Einstellung der Steuerzeiten von Gaswechselventilen einer Brennkraftmaschine nach einer der dargelegten Bauarten kann das Rückschlagventil an verschiedensten Stellen des Druckmittelkreislaufs in die Brennkraftmaschine integriert werden, ohne zusätzlichen Bauraum zu beanspruchen. Dabei kann das Rückschlagventil beispielsweise in einer Ringnut des Steuerventils angeordnet sein, oder, im Falle eines innerhalb der Vorrichtung angeordneten zentralen Steuerventils, in einer Drehdurchführung für Druckmittel, worüber dieses zum Zulaufanschluss des Steuerventils gelangt. Dabei kann es sich beispielsweise um eine Drehdurchführung für Druckmittel zwischen einer Nockenwelle und einer Lagerbrücke der Nockenwelle handeln.

Durch die Ausbildung der Rückschlagventile ist auch eine einfache und funktionssichere Montage gewährleistet.

### Kurze Beschreibung der Zeichnungen

Weitere Merkmale der Erfindung ergeben sich aus der nachfolgenden Beschreibung und aus den Zeichnungen, in denen Ausführungsbeispiele der Erfindung vereinfacht dargestellt sind. Es zeigen:

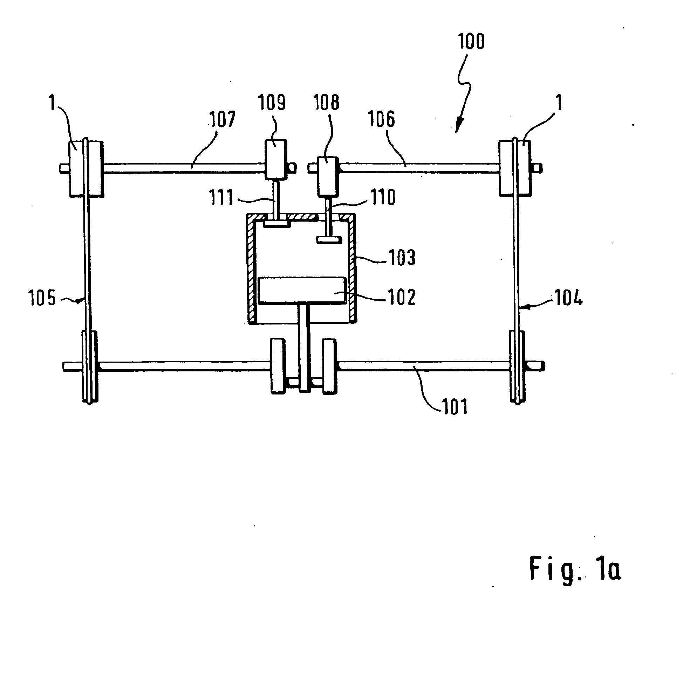

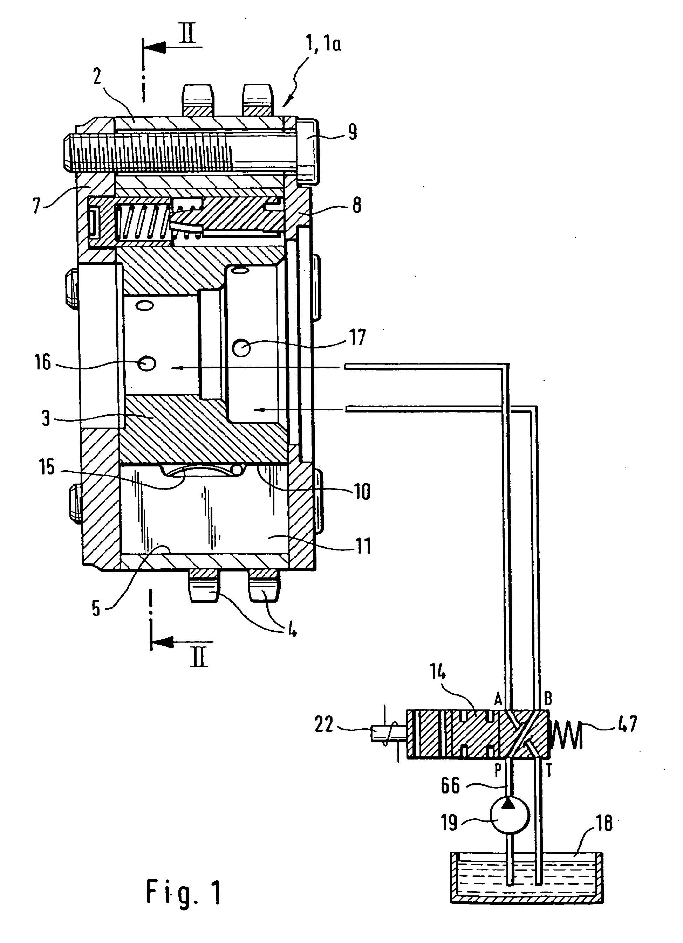

- Figur 1 a: nur sehr schematisch eine Brennkraftmaschine,
- Figur 1: einen Längsschnitt durch eine Vorrichtung zur Veränderung der Steuerzeiten einer Brennkraftmaschine mit Druckmittel- kreislauf,
- Figur 2: einen Querschnitt durch die in Figur 1 dargestellte Vorrich- tung entlang der Linie II-II,
- Figur 3: einen Längsschnitt durch ein Steuerventil,
- Figur 4: eine perspektivische Ansicht einer ersten Ausführungsform eines erfindungsgemäßen Steuerventils,
- Figur 5: eine perspektivische Ansicht des Schließkörpers aus Figur 4,
- Figur 6a: einen Querschnitt durch das erfindungsgemäße Steuerven- til aus Figur 4 im Bereich des Zulaufanschlusses, welches in einer Umgebungskonstruktion angeordnet ist,
- Figur 6b: einen Querschnitt analog Figur 6a,
- Figur 7a: einen Querschnitt durch das erfindungsgemäße Steuerven- til analog zu Figur 6a mit einem modifizierten Schließkör- per,
- Figur 7b: einen Querschnitt durch das erfindungsgemäße Steuerven- til analog zu Figur 6b mit einem weiteren, modifizierten Schließkörper,
- Figur 8: eine perspektivische Ansicht einer zweiten Ausführungs- form eines erfindungsgemäßen Steuerventils,
- Figur 9: eine perspektivische, teilweise geschnittene Ansicht des Rückschlagventils nach Figur 8.

### Ausführliche Beschreibung der Zeichnung

In Figur 1a ist eine Brennkraftmaschine 100 skizziert, wobei ein auf einer Kurbelwelle 101 sitzender Kolben 102 in einem Zylinder 103 angedeutet ist. Die Kurbelwelle 101 steht in der dargestellten Ausführungsform über je einen Zugmitteltrieb 104 bzw. 105 mit einer Einlassnockenwelle 106 bzw. Auslassnockenwelle 107 in Verbindung, wobei eine erste und eine zweite Vorrichtung 1 zur variablen Einstellung der Steuerzeiten von Gaswechselventilen 110, 111 für eine Relativdrehung zwischen Kurbelwelle 101 und Nockenwellen 106, 107 sorgen können. Nocken 108, 109 der Nockenwellen 106, 107 betätigen ein Einlassgaswechselventil 110 bzw. ein Auslassgaswechselventil 111. Ebenso kann vorgesehen sein nur eine der Nockenwellen 106, 107 mit einer Vorrichtung 1 auszustatten, oder nur eine Nockenwelle 106, 107 vorzusehen, welche mit einer Vorrichtung 1 versehen ist.

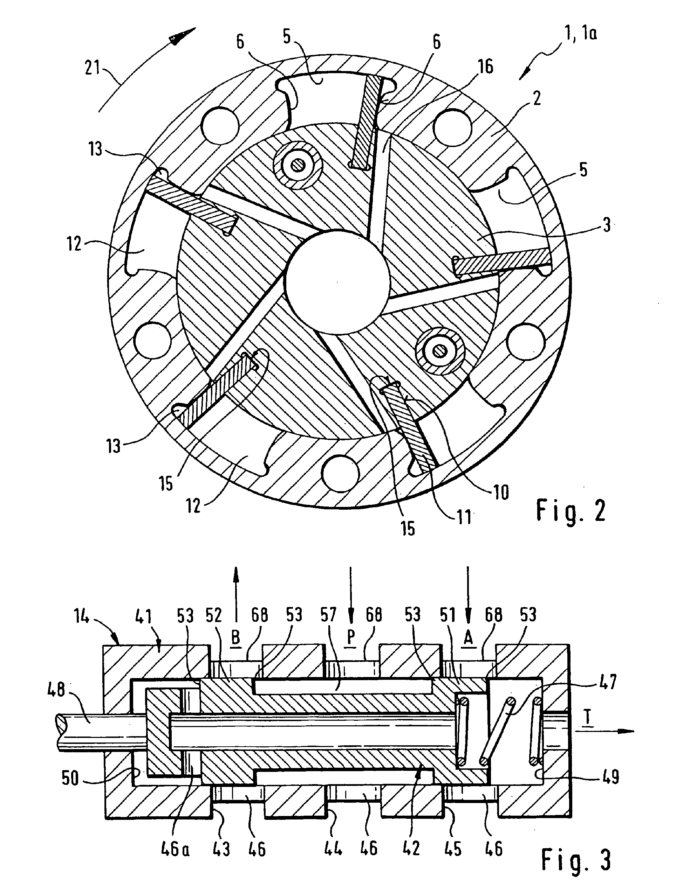

Die Figuren 1 und 2 zeigen eine hydraulische Verstellvorrichtung 1 a einer Vorrichtung 1 zur variablen Einstellung der Steuerzeiten von Gaswechselventilen 110, 111 einer Brennkraftmaschine 100. Die Verstellvorrichtung 1 a besteht im Wesentlichen aus einem Stator 2 und einem konzentrisch dazu angeordneten Rotor 3. Ein Antriebsrad 4 ist drehfest mit dem Stator 2 verbunden und in der dargestellten Ausführungsform als Kettenrad ausgebildet. Ebenso denkbar sind Ausführungsformen des Antriebsrads 4 als Riemen- oder Zahnrad. Der Stator 2 ist drehbar auf dem Rotor 3 gelagert, wobei an der Innenmantelfläche des Stators 2 in der dargestellten Ausführungsform fünf in Umfangsrichtung beabstandete Ausnehmungen 5 vorgesehen sind. Die Ausnehmungen 5 werden in radialer Richtung vom Stator 2 und dem Rotor 3, in Umfangsrichtung von zwei Seitenwänden 6 des Stators 2 und in axialer Richtung durch einen ersten und einen zweiten Seitendeckel 7, 8 begrenzt. Jede der Ausnehmungen 5 ist auf diese Weise druckdicht verschlossen. Der erste und der zweite Seitendeckel 7, 8 sind mit dem Stator 2 mittels Verbindungselementen 9, beispielsweise Schrauben, verbunden.

An der Außenmantelfläche des Rotors 3 sind axial verlaufende Flügelnuten 10 ausgebildet, wobei in jeder Flügelnut 10 ein sich radial erstreckender Flügel 11 angeordnet ist. In jede Ausnehmung 5 erstreckt sich ein Flügel 11, wobei die Flügel 11 in radialer Richtung am Stator 2 und in axialer Richtung an den Seitendeckeln 7, 8 anliegen. Jeder Flügel 11 unterteilt eine Ausnehmung 5 in zwei gegeneinander arbeitende Druckkammern 12, 13. Um ein druckdichtes Anliegen der Flügel 11 am Stator 2 zu gewährleisten, sind in den Flügelnuten 10 Blattfederelemente 15 angeordnet, die den Flügel 11 in radialer Richtung mit einer Kraft beaufschlagen.

Mittels ersten und zweiten Druckmittelleitungen 16, 17 können die ersten und zweiten Druckkammern 12, 13 über ein Steuerventil 14 mit einer Druckmittelpumpe 19 oder einem Tank 18 verbunden werden. Dadurch wird ein Stellantrieb ausgebildet, der eine Relatiwerdrehung des Stators 2 gegenüber dem Rotor 3 ermöglicht. Das Steuerventil 14 ist mit zwei Arbeitsanschlüssen A, B versehen, welche über Druckmittelkanäle mit den Druckmittelleitungen 16, 17 kommunizieren. Des Weiteren sind ein Tank- T und ein Zulaufanschluss P vorgesehen. Über den Tankanschluss T ist das Steuerventil 14 mit einem Tank 18 verbunden. Mittels einer Druckmittelleitung 66 ist der Zulaufanschluss P mit der Druckmittelpumpe 19 verbunden. Mittels einer Stelleinheit 22 kann das Steuerventil 14 in mehrere Steuerstellungen überführt werden, in denen unterschiedliche Anschlüsse A, B, P, T miteinander kommunizieren. Dabei ist vorgesehen, dass entweder alle ersten Druckkammern 12 mit der Druckmittelpumpe 19 und alle zweiten Druckkammern 13 mit dem Tank 18 verbunden werden bzw. die genau entgegen gesetzte Konfiguration. Werden die ersten Druckkammern 12 mit der Druckmittelpumpe 19 und die zweiten Druckkammern 13 mit dem Tank 18 verbunden, so dehnen sich die ersten Druckkammern 12 auf Kosten der zweiten Druckkammern 13 aus. Daraus resultiert eine Verschiebung der Flügel 11 in Umfangsrichtung, in der durch den ersten Pfeil 21 dargestellten Richtung. Durch das Verschieben der Flügel 11 wird der Rotor 3 relativ zum Stator 2 verdreht. Daraus resultiert eine Phasenverschiebung zwischen Nockenwelle 106, 107 und Kurbelwelle 101. Durch gezieltes Ein- bzw. Ableiten von Druckmittel in die bzw. aus den Druckkammern 12, 13 können somit die Steuerzeiten der Gaswechselventile 110, 111 der Brennkraftmaschine 100 gezielt variiert werden.
Des Weiteren ist eine Steuerstellung vorgesehen, in der beide Arbeitsanschlüsse A, B entweder nur mit dem Zulaufanschluss P, oder weder mit dem Zulauf- P noch mit dem Tankabschluss T verbunden sind. In dieser Steuerstellung des Steuerventils 14 wird die relative Phasenlage des Rotors 3 zum Stator gehalten. Um zu vermeiden, dass in der Vorrichtung 1 entstehende Druckspitzen zur Druckmittelpumpe 19 gelangen, ist zwischen dieser und dem Inneren des Steuerventils 14, wie noch dargelegt wird, ein Rückschlagventil vorgesehen.

Die Figur 3 zeigt schematisch einen Längsschnitt durch ein Steuerventil 14. Das Steuerventil 14 besteht aus einem Ventilgehäuse 41 und einem Steuerkolben 42. Das Ventilgehäuse 41 ist im Wesentlichen hohlzylindrisch ausgeführt, wobei in dessen Außenmantelfläche drei axial beabstandete Ringnuten 43, 44, 45 ausgebildet sind. Jede der Ringnuten 43 bis 45 stellt einen Anschluss des Steuerventils 14 dar, wobei die in axialer Richtung äußeren (erste und dritte) Ringnuten 43, 45 die Arbeitsanschlüsse A, B bilden und die mittlere (zweite) Ringnut 44 den Zulaufanschluss P. Ein Tankanschluss T ist durch eine Öffnung in einer Stirnseite des Ventilgehäuses 41 ausgeführt. Jede der Ringnuten 43 bis 45 steht über erste Radialöffnungen 46 mit dem inneren des Ventilgehäuses 41 in Verbindung. Innerhalb des Ventilgehäuses 41 ist ein im Wesentlichen hohlzylindrisch ausgeführter Steuerkolben 42 axial verschiebbar angeordnet. Der Steuerkolben 42 wird an einer Stirnseite von einem Federelement 47 und an der gegenüberliegenden Stirnfläche von einer Stößelstange 48 einer Stelleinheit 22 mit einer Kraft beaufschlagt. Durch Bestromen der Stelleinheit 22 kann der Steuerkolben 42 gegen die Kraft des Federelements 47 in eine beliebige Position zwischen einem ersten und einem zweiten Endanschlag 49, 50 verschoben werden.

Der Steuerkolben 42 ist mit einem ersten und einem zweiten Ringsteg 51, 52 versehen. Die Außendurchmesser der Ringstege 51, 52 sind dem Innendurchmesser des Ventilgehäuses 41 angepasst. Zwischen den Ringstegen 51, 52 ist am Steuerkolben 42 eine vierte Ringnut 57 ausgebildet. Weiterhin sind in den Steuerkolben 42 zwischen dessen stirnseitigem Ende, an dem die Stößelstange 48 angreift, und dem zweiten Ringsteg 52 zweite Radialöffnungen 46a ausgebildet, wodurch das Innere des Steuerkolbens 42 mit dem Inneren des Ventilgehäuses 41 in Verbindung steht. Der erste und der zweite Ringsteg 51, 52 sind derart ausgebildet und an der Außenmantelfläche des Steuerkolbens 42 angeordnet, dass Steuerkanten 53 in Abhängigkeit von der Stellung des Steuerkolbens 42 relativ zum Ventilgehäuse 41 eine Verbindung zwischen dem Zulaufanschluss P und den Arbeitsanschlüssen A, B über die vierte Ringnut 57 freigeben oder sperren. Gleichzeitig wird eine Verbindung zwischen den Arbeitsanschlüssen A, B und dem Tankanschluss T freigegeben oder versperrt. Durch Einflussnahme auf die Stellung des Steuerkolbens 42 innerhalb des Ventilgehäuses 41 kann gezielt den ersten oder den zweiten Druckkammern 12, 13 Druckmittel zugeführt und aus den jeweils anderen Druckkammern 12, 13 abgeführt werden, wodurch die Phasenlage der Nockenwelle 106, 107 relativ zur Kurbelwelle 101 gezielt verändert werden kann.

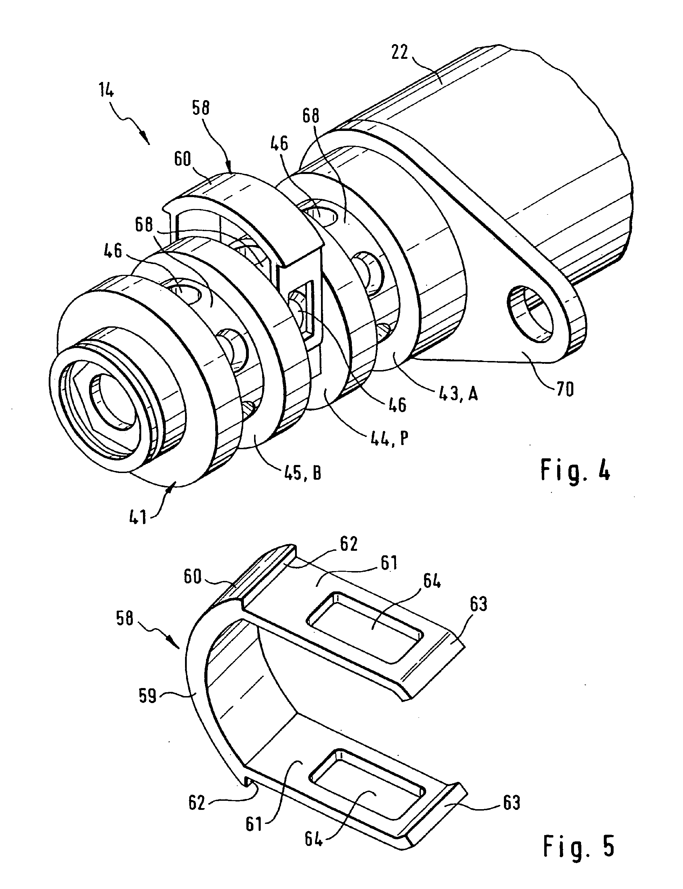

Figur 4 zeigt ein erfindungsgemäßes Steuerventil 14 in einer perspektivischen Darstellung. Dargestellt sind ein Ventilgehäuse 41, eine Stelleinheit 22 und ein Schließkörper 58 eines Rückschlagventils 54. Der Schließkörper 58 ist in der zweiten Ringnut 44 angeordnet und besteht aus einem starren, nur wenig flexiblen Material, beispielsweise einem Kunststoff. Zwischen der Stelleinheit 22 und dem Ventilgehäuse 41 ist ein Montageflansch 70 mit einer Bohrung vorgesehen, mittels derer das Steuerventil 14 an einer Umgebungskonstruktion (in dieser Figur nicht dargestellt) befestigt werden kann.

Figur 5 zeigt eine perspektivische Ansicht des Schließkörpers 58. Dieser besteht aus einem Sperrkörper 59 mit einer Dichtfläche 60 und Führungselementen 61, die in der dargestellten Ausführungsform als Führungsstege ausgebildet sind. Des Weiteren sind an dem Sperrkörper 59 Anströmflächen 62 ausgebildet, welche über die Führungselemente 61 hinausragen. An den Führungselementen 61 sind als Rastnasen 63 ausgeführte Halteelemente und Durchströmungsöffnungen 64 ausgebildet.

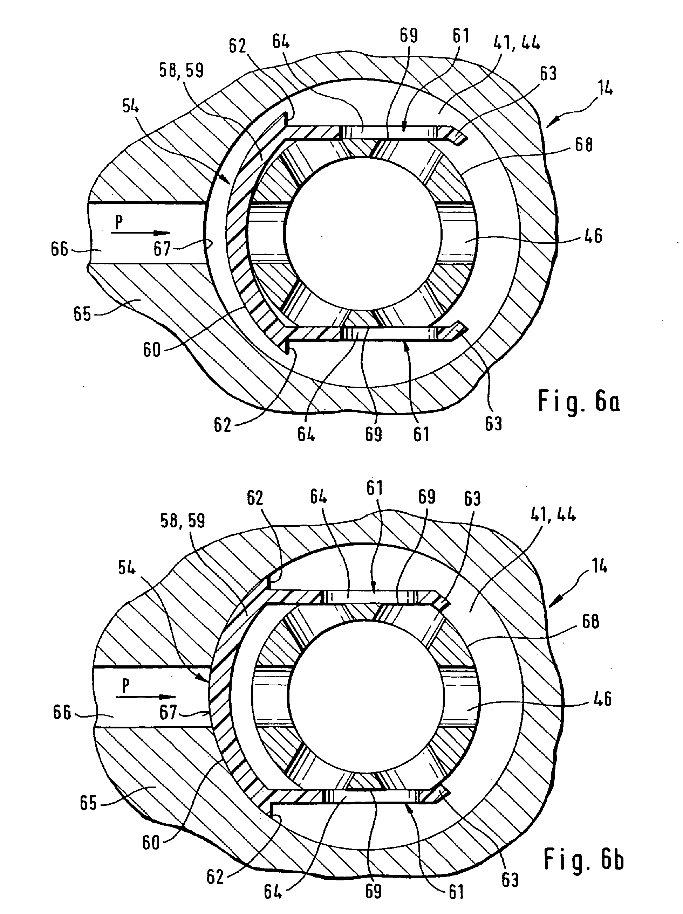

Die Figuren 6a und 6b zeigen ein erfindungsgemäßes Steuerventil 14, analog zu dem in Figur 4 dargestellten, im Querschnitt, wobei die Schnittebene im Bereich des Zulaufanschlusses P liegt. Das Steuerventil 14 ist in dieser Darstellung in einer Umgebungskonstruktion 65 montiert. In der Umgebungskonstruktion 65 ist eine Druckmittelleitung 66 ausgebildet, welche die zweite Ringnut 44 mit einer Druckmittelpumpe (nicht dargestellt) verbindet. Die Druckmittelleitung 66 kommuniziert über eine in der Wandung der Umgebungskonstruktion 65 ausgebildete Öffnung 67 mit der zweiten Ringnut 44.

Der Schließkörper 58 ist derart in der zweiten Ringnut 44 angeordnet, dass die Dichtfläche 60 des Sperrkörpers 59 in Richtung der Öffnung 67 orientiert ist.

Der Nutgrund 68 der zweiten Ringnut 44 ist mit zwei Abflachungen 69 versehen, wobei diese derart ausgebildet sind, dass die als Führungsstege ausgebildeten Führungselemente 61 im montierten Zustand des Schließkörpers 58 an diesen anliegen. Die Abflachungen 69 dienen somit als Führungsflächen für den Schließkörper 58.
Die Abflachungen 69 sind in einer definierten Orientierung zur Bohrung des Montageflansches 70 ausgebildet. Dadurch erfüllen diese zum einen die Funktion, dass der Schließkörper 58 in der korrekten Orientierung zur Öffnung 67 auf dem Ventilgehäuse 41 montiert wird. Der Montageflansch 70 gibt die Orientierung des Ventilgehäuses 41 innerhalb der Umgebungskonstruktion 65 vor und die Abflachungen 69 geben die Orientierung des Sperrkörpers 59 in der zweiten Ringnut 44 vor.
Des Weiteren übernehmen die Führungselemente 61 während des Betriebs der Brennkraftmaschine 100 eine Führungsfunktion, wodurch der Schließkörper 58 ausschließlich in radialer Richtung des Ventilgehäuses 41 bewegt werden kann.

In Figur 6a ist das Rückschlagventil 54 in seinem geöffneten Zustand dargestellt. Druckmittel, welches über die Öffnung 67 in die zweite Ringnut 44 eintritt, drängt den Sperrkörper 59 und damit den Schließkörper 58 gegen den Nutgrund 68 der zweiten Ringnut 44. Das Druckmittel kann nun über die zweite Ringnut 44, die Durchströmungsöffnungen 64 und die ersten Radialöffnungen 46 in das Innere des Ventilgehäuses 41 gelangen.

Bei umgekehrtem Druckmittelfluss vom Inneren des Ventilgehäuses 41 in Richtung der Öffnung 67 steht das Druckmittel an der Rückseite des Sperrkörpers 59 und den Anströmflächen 62 an. Dadurch wird der Schließkörper 58, geführt von den Führungselementen 61, in Richtung der Öffnung 67 bewegt, bis der Schließkörper 58 an der Wandung der Umgebungskonstruktion 65 zum Anliegen kommt. Dieser gesperrte Zustand des Rückschlagventils 54 ist in Figur 6b dargestellt. In diesem Zustand ist die Öffnung 67 durch den Sperrkörper 59 blockiert und in der Vorrichtung 1 entstehende Druckspitzen können sich nicht über die Druckmittelleitung 66 bis zur Druckmittelpumpe fortpflanzen.

In diesem Zustand des Rückschlagventils 54 liegen die Rastnasen 63 am Nutgrund 68 der zweiten Ringnut 44 an. Während des Transportes des Steuerventils 14 dienen diese Rastnasen 63 somit als Verliersicherung. Während der Montage sorgen die Rastnasen 63 weiterhin dafür, dass der Sperrkörper 59 nicht über den Rand der zweiten Ringnut 44 hinausragt. Somit ist gewährleistet, dass der Sperrkörper 59 während der Montage des Steuerventils 14 in der Umgebungskonstruktion 65 nicht beschädigt wird oder gar abschert und ein Klemmen des Steuerventils 14 in der Umgebungskonstruktion 65 verursacht.

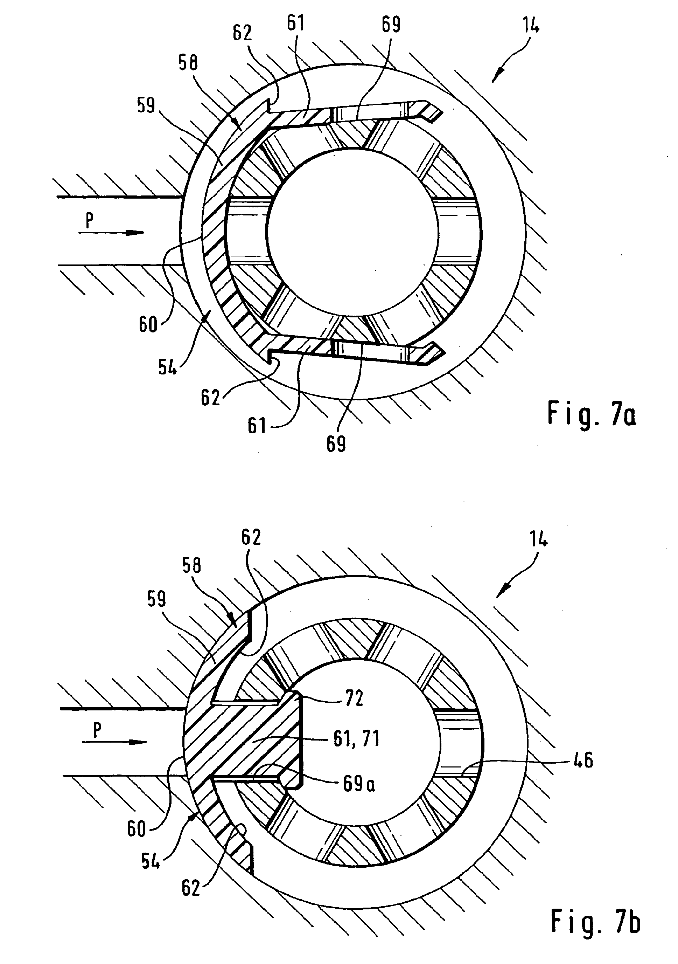

Die Figur 7a zeigt eine Darstellung eines erfindungsgemäßen Steuerventils 14 analog Figur 6a mit einem modifizierten Schließkörper 58. Im Unterschied zu der vorhergehenden Ausführungsform sind hier die als Führungsstege ausgebildeten Führungselemente 61 und die korrespondierenden Abflachungen 69 unter einem bestimmten Winkel zueinander ausgebildet. Dies hat den Vorteil, dass der Schließkörper 58 in nur genau einer Orientierung in der zweiten Ringnut 44 montiert werden kann. Somit sind Fehlorientierungen des Schließkörpers 58 ausgeschlossen.

Figur 7b zeigt eine weitere Darstellung eines erfindungsgemäßen Steuerventils 14 analog Figur 6b mit einem weiteren, modifizierten Schließkörper 58. Das Führungselement 61 ist in diesem Fall als Zapfen 71 ausgebildet, der zentral an der Rückseite des Sperrkörpers 59 angeordneter ist. Der Zapfen 71 greift in eine der ersten Radialöffnungen 46 der zweiten Ringnut 44 ein. Dabei dient eine ringförmige Wandung 69a der Radialöffnung 46 als Führungsfläche für den Schließkörper 58. Um während der Montage die korrekte Orientierung des Schließkörpers 58 sicherzustellen, ist vorteilhafterweise die zur Führung des Schließkörpers 58 bestimmte Radialöffnungen 46 größer ausgeführt als die restlichen radialöffnungen 46 und der Zapfen 71 der Abmessung der größeren der Radialöffnungen 46 angepasst. Um ein sicheres Schließen des Rückschlagventils 54 zu gewährleisten, ist die Außenmantelfläche des Zapfens vorteilhafterweise profiliert ausgebildet. Dadurch kann Druckmittel durch die den Zapfen 71 aufnehmende Radialöffnung 46 fließen und den Sperrkörper 59 anströmen.

Am vom Sperrkörper 59 abgewandten Ende des Zapfens 71 ist eine ringförmig umlaufende Wulst 72 an diesem angebracht, welche als Halteelement dient.

Neben der Anordnung des Schließkörpers 58 in der zweiten Ringnut 44 zwischen dem Ventilgehäuse 41 und einer Umgebungskonstruktion 65 ist es natürlich auch denkbar diesen innerhalb der vierten Ringnut 57 zwischen dem Steuerkolben 42 und dem Ventilgehäuse 41 anzuordnen. Dies kann beispielsweise in der in der JP 07-229408 dargestellten Ausführungsform eines Steuerventils 14 realisiert sein.

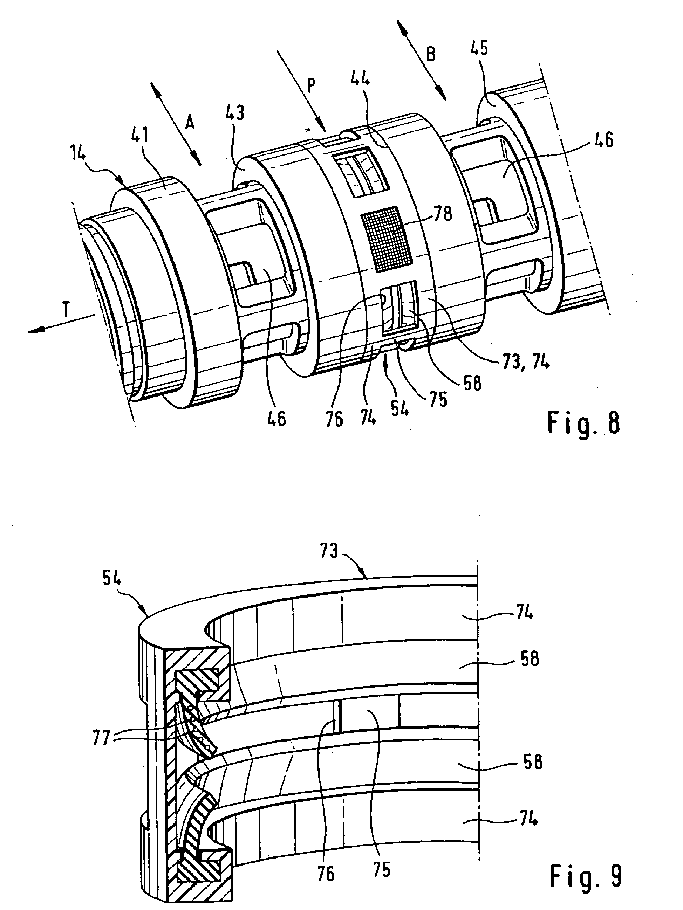

Die Figur 8 zeigt eine weitere erfindungsgemäße Ausführungsform eines Steuerventils 14 mit einer anderen Variante eines Rückschlagventils 54. Figur 9 zeigt das Rückschlagventil 54 in einer perspektivischen, teilweise geschnittenen Darstellung. Das Rückschlagventil 54 besteht aus einem starren Rahmen 73 und zwei flexiblen Schließkörpern 58.

Der Rahmen 73 weist zwei ringförmige Abschnitte 74 auf, die über mehrere Abstützstreben 75 miteinander verbunden sind. Die Abstützstreben 75 werden durch mehrere in Umfangsrichtung beabstandete Aussparungen 76 voneinander getrennt. Die Erstreckung des Rahmens 73 in axialer Richtung entspricht der Erstreckung der zweiten Ringnut 44. Dadurch ist gewährleistet, dass der Rahmen 73 druckdicht an den die zweite Ringnut 44 begrenzenden Ringflächen anliegt und somit der Druckmittelfluss nur über die Aussparungen 76 erfolgen kann. Des Weiteren erstreckt sich der Rahmen 73 in Umfangsrichtung entlang der gesamten zweiten Ringnut 44. In radialer Richtung innerhalb der Abstützstreben 75 sind zwei flexible Schließkörper 58 angeordnet. Jeder Schließkörper 58 ist als ringförmig gebogenes Band ausgebildet, welches entlang der gesamten inneren Umfangsfläche des Rahmens 73 umläuft. Jeweils eine axiale Seite der Schließkörper 58 ist in dem Rahmen 73 aufgenommen und fest mit diesem verbunden. Dies kann, wie in der Figur dargestellt, mittels formschlüssiger Mittel oder beispielsweise durch teilweises Eingießen der Schließkörper 58 während der Herstellung des Rahmens 73 realisiert werden. In einer vorteilhaften Ausführungsform sind die Schließkörper 58 als Silikondichtlippen ausgeführt, die in einem zwei Komponentenspritzgussverfahren direkt in den Rahmen eingespritzt werden.

Im Folgenden wird die Wirkungsweise des Rückschlagventils 54 erklärt. Bei Druckmittelfluss in das Innere des Steuerventils 14 werden die flexiblen Schließkörper 58 radial nach innen gedrängt, wodurch die Aussparungen 76 geöffnet werden.

Bei umgekehrtem Druckmittelfluss werden die Schließkörper 58 gegen die Abstützstreben 75 gedrängt, wodurch die Schließkörper 58 aufeinander zum Anliegen kommen und die Aussparungen 76 versperren.

Zusätzlich können in den Schließkörpern 58 Versteifungsstreben 77 vorgesehen sein, welche verhindern, dass die Schließkörper 58 durch die Aussparungen 76 gedrückt werden. Diese Versteifungsstreben 77 sind vorteilhafterweise in Umfangsrichtung orientiert, so dass sie ein Öffnen der Schließkörper 58 nicht behindern.
In dieser Ausführungsform eines Rückschlagventils 54 können die Aussparungen 76 mit einem Filtergewebe 78 versehen sein. Dieses kann beispielsweise während der Herstellung des Rahmens 73 in diesen eingegossen werden. Dadurch können die Funktionen eines Ringfilters und die eines Rückschlagventils 54 innerhalb eines Bauteils vereinigt werden. Das Filtergewebe 78 ist in Figur 8 aus Gründen der Klarheit nur in einer der Aussparungen 76 dargestellt. Um die Filterfunktion zu erfüllen ist es natürlich in sämtlichen Aussparungen 76 vorgesehen.

Die Ausbildung der Rückschlagventile 54 nach einer der oben dargestellten Ausführungsformen hat den Vorteil, dass diese innerhalb einer Ringnut 44 des Steuerventils 14 angeordnet sind und somit keinen zusätzlichen Bauraum benötigen. Die Rückschlagventile 54 können einfach montiert werden, wobei sichergestellt ist, dass während der Montage des Steuerventils 14 die Funktion der Rückschlagventile 54 nicht beeinträchtigt wird. Des Weiteren sind alle Ausführungen als Kunststoffspritzgussteile mit integrierter Filterfunktion denkbar.

### Bezugszeichen

- 1: Vorrichtung
- 1a: Stellvorrichtung
- 2: Stator
- 3: Rotor
- 4: Antriebsrad
- 5: Ausnehmungen
- 6: Seitenwand
- 7: erster Seitendeckel
- 8: zweiter Seitendeckel
- 9: Verbindungselement
- 10: Flügelnut
- 11: Flügel
- 12: erste Druckkammer
- 13: zweite Druckkammer
- 14: Steuerventil
- 15: Blattfederelement
- 16: erste Druckmittelleitung
- 17: zweite Druckmittelleitung
- 18: Tank
- 19: Druckmittelpumpe
- 21: Pfeil
- 22: Stelleinheit
- 41: Ventilgehäuse
- 42: Steuerkolben
- 43: erste Ringnut
- 44: zweite Ringnut
- 45: dritte Ringnut
- 46: erste Radialöffnungen
- 46a: zweite Radialöffnungen
- 47: Federelement
- 48: Stößelstange
- 49: erster Endanschlag
- 50: zweiter Endanschlag
- 51: erster Ringsteg
- 52: zweiter Ringsteg
- 53: Steuerkante
- 54: Rückschlagventil
- 57: vierte Ringnut
- 58: Schließkörper
- 59: Sperrkörper
- 60: Dichtfläche
- 61: Führungselement
- 62: Anströmflächen
- 63: Rastnase
- 64: Durchströmungsöffnung
- 65: Umgebungskonstruktion
- 66: Druckmittelleitung
- 67: Öffnung
- 68: Nutgrund
- 69: Abflachungen
- 69a: Wandung
- 70: Montageflansch
- 71: Zapfen
- 72: Wulst
- 73: Rahmen
- 74: ringförmiger Abschnitt
- 75: Abstützstreben
- 76: Aussparungen
- 77: Versteifungsstreben
- 78: Filtergewebe
- 100: Brennkraftmaschine
- 101: Kurbelwelle
- 102: Kolben
- 103: Zylinder
- 104: Zugmitteltrieb
- 105: Zugmitteltrieb
- 106: Einlassnockenwelle
- 107: Auslassnockenwelle
- 108: Nocken
- 109: Nocken
- 110: Einlassgaswechselventil
- 111: Auslassgaswechselventil

- P: Zulaufanschluss
- T: Tankanschluss
- A: erster Arbeitsanschluss
- B: zweiter Arbeitsanschluss

## Patentansprüche

1. : Steuerventil (14) für eine Vorrichtung (1) zur variablen Einstellung der Steuerzeiten von Gaswechselventilen (110, 111) einer Brennkraftmaschine (100),
- mit einem Ventilgehäuse (41), welches innerhalb einer Umgebungskonstruktion (65) angeordnet ist,
- mit einem Steuerkolben (42), welcher innerhalb des Ventilgehäuses (41) angeordnet ist,
- wobei an dem Ventilgehäuse (41) eine sich in dessen Umfangsrichtung erstreckende Ringnut (44) ausgebildet ist, die von Druckmittel durchströmt wird,
- und mit einem in der Ringnut (44) angeordneten Rückschlagventil (54) mit mindestens einem flexibel ausgebildeten Schließkörper (58), **dadurch gekennzeichnet, dass**
- das Rückschlagventil (54) weiterhin einen der Form der Ringnut (44) angepassten Rahmen (73) aufweist, in dem ein Ende des mindestens einen Schließkörpers (58) aufgenommen ist und weiterhin über zumindest einen Anschlag (74, 75)) verfügt der die Schließbewegung des Schließkörpers (58) begrenzt.

2. Steuerventil (14) nach Anspruch 1, **dadurch gekennzeichnet, dass** der Schließkörper (58) aus einem ringförmig gebogenen Band besteht und sich in Umfangsrichtung erstreckt, wobei ein axiales, ringförmiges Ende des Schließkörpers (58) in dem Rahmen (73) aufgenommen ist.

3. Steuerventil (14) nach Anspruch 1, **dadurch gekennzeichnet, dass** zwei Schließkörper (58) vorgesehen sind, die in axialer Richtung zueinander versetzt angeordnet sind, wobei jeweils ein Ende jedes Schließkörpers (58) in dem Rahmen (73) aufgenommen ist und wobei es sich bei diesen Enden um das jeweils von dem anderen Schließkörper (58) abgewandte Ende handelt.

4. Steuerventil (14) nach Anspruch 1, **dadurch gekennzeichnet, dass** die zwei Schließkörper (58) derart angeordnet und ausgebildet sind, dass diese sich im gesperrten Zustand des Rückschlagventils (54) in axialer Richtung überlappen.

5. Steuerventil (14) nach Anspruch 1, **dadurch gekennzeichnet, dass** der Rahmen (73) mit zwei sich in Umfangsrichtung erstreckenden Ringelementen ausgebildet ist, welche durch mehrere, in Umfangsrichtung beabstandete, sich im wesentlichen axial erstreckende Abstützstreben miteinander verbunden sind, wobei sich zwischen den Ringelementen ein Filtergewebe erstreckt.

6. Steuerventil (14) nach Anspruch 1, **dadurch gekennzeichnet, dass** der flexible Schließkörper (58) mit Versteifungselementen (77) versehen ist, welche sich in Umfangsrichtung oder in axialer Richtung erstrecken.

7. Steuerventil (14) nach Anspruch 1, **dadurch gekennzeichnet, dass** die axiale Erstreckung des Rahmens (73) der axialen Erstreckung der Ringnut (44) angepasst ist.

8. Steuerventil (14) nach Anspruch 1, **dadurch gekennzeichnet, dass** an dem Schließkörper (58) mindestens ein Führungselement (61) ausgebildet ist, welches mit mindestens einer Führungsfläche (69, 69a), das an dem die Nut (44) aufweisenden Bauteil ausgebildet ist, zusammenwirkt.

9. Steuerventil (14) nach Anspruch 1, **dadurch gekennzeichnet, dass** an dem Schließkörper (58) Halteelemente (63, 71) ausgebildet sind, welche den Schließkörper (58) innerhalb der Nut (44) halten.

10. Steuerventil (14) nach Anspruch 1, **dadurch gekennzeichnet, dass** der Schließkörper (58) und das die Nut (44) aufweisende Bauteil derart ausgeführt sind, dass der Schließkörper (58) nur in der vorgesehenen Orientierung montierbar ist.

11. Verwendung eines in einer Ringnut (44) angeordneten Rückschlagventils (54) für einen Druckmittelkreislauf einer Vorrichtung (1) zur variablen Einstellung der Steuerzeiten von Gaswechselventilen (110, 111) einer Brennkraftmaschine (100),
- mit mindestens einem flexibel ausgebildeten Schließkörper (58), **dadurch gekennzeichnet, dass**
- das Rückschlagventil (54) weiterhin einen Rahmen (73) aufweist, in dem ein Ende des mindestens einen Schließkörpers (58) aufgenommen ist und weiterhin über zumindest einen Anschlag (74, 75) verfügt der die Schließbewegung des Schließkörpers (58) begrenzt.

12. Verwendung Rückschlagventils (54), nach Anspruch 11, **dadurch gekennzeichnet, dass** das Rückschlagventil (54) in einer Drehdurchführung für Druckmittel zwischen einer Nockenwelle (106, 107) und einer Lagerbrücke der Nockenwelle (106, 107) angeordnet ist.

13. Verwendung Rückschlagventils (54), nach Anspruch 11, **dadurch gekennzeichnet, das** Rückschlagventil (54) in einer Ringnut (44) eines Steuerventils (14) angeordnet ist.

## Claims

1. Control valve (14) for an apparatus (1) for the variable setting of the control times of gas exchange valves (110, 111) of an internal combustion engine (100),
- having a valve housing (41) which is arranged within a surrounding construction (65),
- having a control piston (42) which is arranged within the valve housing (41),
- an annular groove (44) which extends in the circumferential direction of the valve housing (41) and through which pressure medium flows is formed on the said valve housing (41),
- and having a non-return valve (54) which is arranged in the annular groove (44) and has at least one closing body (58) of flexible configuration, **characterized in that**,
- furthermore, the non-return valve (54) has a frame (73), which is adapted to the shape of the annular groove (44) and in which one end of the at least one closing body (58) is received, and, furthermore, has at least one stop (74, 75) which limits the closing movement of the closing body (58).

2. Control valve (14) according to Claim 1, **characterized in that** the closing body (58) comprises an annularly bent band and extends in the circumferential direction, an axial, annular end of the closing body (58) being received in the frame (73).

3. Control valve (14) according to Claim 1, **characterized in that** two closing bodies (58) are provided which are arranged offset in the axial direction with respect to one another, in each case one end of each closing body (58) being received in the frame (73), and these ends being the end which faces away in each case from the other closing body (58).

4. Control valve (14) according to Claim 1, **characterized in that** the two closing bodies (58) are arranged and configured in such a way that they overlap in the axial direction in the shut state of the non-return valve (54).

5. Control valve (14) according to Claim 1, **characterized in that** the frame (73) is configured with two ring elements which extend in the circumferential direction and are connected to one another by a plurality of substantially axially extending supporting struts which are spaced apart in the circumferential direction, a filter fabric extending between the ring elements.

6. Control valve (14) according to Claim 1, **characterized in that** the flexible closing body (58) is provided with reinforcing elements (77) which extend in the circumferential direction or in the axial direction.

7. Control valve (14) according to Claim 1, **characterized in that** the axial extent of the frame (73) is adapted to the axial extent of the annular groove (44).

8. Control valve (14) according to Claim 1, **characterized in that** at least one guide element (61) is formed on the closing body (58), which guide element (61) interacts with at least one guide face (69, 69a) which is formed on the component which has the groove (44).

9. Control valve (14) according to Claim 1, **characterized in that** holding elements (63, 71) which hold the closing body (58) within the groove (44) are formed on the closing body (58).

10. Control valve (14) according to Claim 1, **characterized in that** the closing body (58) and the component which has the groove (44) are configured in such a way that the closing body (58) can be mounted only in the provided orientation.

11. Use of a non-return valve (54) which is arranged in an annular groove (44) for a pressure-medium circuit of an apparatus (1) for the variable setting of the control times of gas exchange valves (110, 111) of an internal combustion engine (100),
- having at least one closing body (58) of flexible configuration, **characterized in that**,
- furthermore, the non-return valve (54) has a frame (73), in which one end of the at least one closing body (58) is received, and, furthermore, has at least one stop (74, 75) which limits the closing movement of the closing body (58).

12. Use of a non-return valve (54) according to Claim 11, **characterized in that** the non-return valve (54) is arranged in a rotary leadthrough for pressure medium between a camshaft (106, 107) and a bearing bracket of the camshaft (106, 107).

13. Use of a non-return valve (54) according to Claim 11, **characterized in that** the non-return valve (54) is arranged in an annular groove (44) of a control valve (14).

## Revendications

1. Soupape de commande (14) pour un dispositif (1) pour le réglage variable des temps de commande de soupapes d'échange de gaz (110, 111) d'un moteur à combustion interne (100), comprenant :
- un boîtier de soupape (41), qui est disposé à l'intérieur d'une construction d'enceinte (65),
- un piston de commande (42), qui est disposé à l'intérieur du boîtier de soupape (41),
- une rainure annulaire (44) s'étendant dans la direction périphérique du boîtier de soupape (41) étant réalisée sur ce dernier, et étant parcourue par du fluide sous pression,
- et une soupape de non retour (54) disposée dans la rainure annulaire (44), avec au moins un corps de fermeture (58) réalisé sous forme flexible, **caractérisée en ce que**
- la soupape de non retour (54) présente en outre un cadre (73) adapté à la forme de la rainure annulaire (44), dans lequel est reçue une extrémité dudit au moins un corps de fermeture (58), et qui dispose en outre d'au moins une butée (74, 75), qui limite le mouvement de fermeture du corps de fermeture (58).

2. Soupape de commande (14) selon la revendication 1, **caractérisée en ce que** le corps de fermeture (58) se compose d'une bande recourbée en forme de bague et s'étend dans la direction périphérique, une extrémité axiale de forme annulaire du corps de fermeture (58) étant reçue dans le cadre (73).

3. Soupape de commande (14) selon la revendication 1, **caractérisée en ce que** deux corps de fermeture (58) sont prévus, lesquels sont disposés de manière décalée l'un par rapport à l'autre dans la direction axiale, une extrémité de chaque corps de fermeture (58) étant à chaque fois reçue dans le cadre (73), et ces extrémités étant à chaque fois l'extrémité opposée à l'autre corps de fermeture (58).

4. Soupape de commande (14) selon la revendication 1, **caractérisée en ce que** les deux corps de fermeture (58) sont disposés et réalisés de telle sorte qu'ils se chevauchent dans la direction axiale dans l'état bloqué de la soupape de non retour (54).

5. Soupape de commande (14) selon la revendication 1, **caractérisée en ce que** le cadre (73) est réalisé avec deux éléments annulaires s'étendant dans la direction périphérique, qui sont connectés l'un à l'autre par plusieurs montants de support s'étendant essentiellement axialement et espacés dans la direction périphérique, un filtre en tissu s'étendant entre les éléments annulaires.

6. Soupape de commande (14) selon la revendication 1, **caractérisée en ce que** le corps de fermeture flexible (58) est pourvu d'éléments de renforcement (77) qui s'étendent dans la direction périphérique ou dans la direction axiale.

7. Soupape de commande (14) selon la revendication 1, **caractérisée en ce que** l'étendue axiale du cadre (73) est adaptée à l'étendue axiale de la rainure annulaire (44).

8. Soupape de commande (14) selon la revendication 1, **caractérisée en ce qu'**au moins un élément de guidage (61) est réalisé sur le corps de fermeture (58), lequel élément de guidage coopère avec au moins une surface de guidage (69, 69a) qui est réalisée sur le composant présentant la rainure (44).

9. Soupape de commande (14) selon la revendication 1, **caractérisée en ce que** des éléments de retenue (63, 71) sont réalisés sur le corps de fermeture (58), lesquels retiennent le corps de fermeture (58) à l'intérieur de la rainure (44).

10. Soupape de commande (14) selon la revendication 1, **caractérisée en ce que** le corps de fermeture (58) et le composant présentant la rainure (44) sont réalisés de telle sorte que le corps de fermeture (58) ne puisse être monté que dans l'orientation prévue.

11. Utilisation d'une soupape de non retour (54) disposée dans une rainure annulaire (44) pour un circuit de fluide sous pression d'un dispositif (1), pour le réglage variable des temps de commande de soupapes d'échange de gaz (110, 111) d'un moteur à combustion interne (100), comprenant:
- au moins un corps de fermeture (58) réalisé sous forme flexible, **caractérisée en ce que**
- la soupape de non retour (54) présente en outre un cadre (73) dans lequel est reçue une extrémité dudit au moins un corps de fermeture (58), et qui dispose en outre d'au moins une butée (74, 75), qui limite le mouvement de fermeture du corps de fermeture (58).

12. Utilisation de la soupape de non retour (54) selon la revendication 11, **caractérisée en ce que** la soupape de non retour (54) est disposée dans un passage rotatif pour fluide sous pression entre un arbre à cames (106, 107) et un pont de palier de l'arbre à cames (106, 107).

13. Utilisation de la soupape de non retour (54) selon la revendication 11, **caractérisée en ce que** la soupape de non retour (54) est disposée dans une rainure annulaire (44) d'une soupape de commande (14).
